# EUROPEAN PATENT SPECIFICATION

(11) **EP 2 075 952 B1**
(45) Date of publication and mention of the grant of the patent: **29.03.2017**
(21) Application number: 07291605.9
(22) Date of filing: 24.12.2007
(51) Int. Cl.: G06Q 30/04, H04L 12/14

(54) **METHOD OF PROVIDING NETWORK TRANSPORT SERVICES**
VERFAHREN ZUM BEREITSTELLEN VON NETZTRANSPORTDIENSTEN
PROCÉDÉ POUR FOURNIR DES SERVICES DE TRANSPORT DE RÉSEAU

(43) Date of publication of application: 01.07.2009
(73) Proprietor: ALCATEL LUCENT, 92100 Boulogne-Billancourt (FR)
(72) Inventor: Dobbelaere, Philippe, 2520 Broechem (BE)
(74) Representative: ALU Antw Patent Attorneys

(56) References cited:
- EP-A- 1 143 692
- WO-A-02/067616
- US-A1- 2002 016 842
- US-B1- 6 938 080

## Description

The present invention relates to a method of providing network transport services for content transported over a network by a source content provider to a destination, such as an end-user, between which in use the network extends.

Network transport providers are sometimes also referred to as access providers, but could include in the present invention also the caretakers of a broad network like the internet. In any case, normally, transport providers exploit a network for service providers to send content thereover to at least one destination, such as an end user. The service providers charge costs to the destination end users on the basis of the value of the content. In contrast, network transport providers have only been charging the service providers or destination end users for the use of the transport network in terms of the volume of the transport of content, since the nature or value of the content is more often than not unknown to the network transport provider and costs are normally only charged to the end-user on the basis of volume, e.g. received bits, or the like.

Network transport providers, like telephone companies, have as a result had to cope with decreasing revenues, whilst in view of this drawback no technical solution has yet been proposed or been made evident. Consequently, network transport providers have not been allotted a fair share of the income for the services or source content providers. One of the reasons is that network transport providers have been restricted by regulatory bodies to calculating flat fees for accommodating content transport over their network, mostly based on volume with no technical or commercial possibility of distinguishing over competitor network transport providers.

WO-A-02/067.616) discloses a system, method and network in which content is transferred from a content provider over a network controlled by a network provider to an end user, for which the end user is billed.

For the reasons as set out above the invention proposes to provide a new method as defined in claim 1 and a system as defined in claim 6. Further embodiments are defined in the dependent claims. For this a nature of the content is to be established, which can be done by inspection into sent packages or to inspect data streams, or to gain access at some (any) level to determine the substance and/or nature of the content.

The expressions "nature" and "type" of the content could be interpreted as distinguishing between executable program files, word processing files, music files, information downloads, for example sport scores, etcetera. To each type of content a corresponding value could be attributed.

Since source content providers send content over the network, which content is valued on the basis of the nature and/or substance of the content requested by and sent to end-users, content nature must be established. However, some concerns must under specific circumstances be respected, like when privacy needs to be respected or that content can be encrypted. For such circumstances value it may be necessary to rely on the cooperation of the source content providers, in that they may send, with or in the content, an indication of the nature of the content to allow the transport network provider to ascertain said nature or substance.

Also for such circumstances it may be useful to be able to offer a service or feature of the transport network in order for the source service providers to be willing to make a contribution to transport network providers. One possible solution to this question may be to offer to source service providers features on the network which are adjusted or adapted to their technical needs or which could also be based on commercial attractiveness from a point of view of transport network providers. Such tailored features could convince source service providers to allow transport network providers to share in the profits, without having to charge the end-users for the transport of content over the network, whilst these end-users are already charged by the source service or content providers for the content itself.

The value attributed to a specific content transport could thus be made dependent on not only the content type, but also on the manner of configuring the transport network for the specific source content provider attempting to deliver the content to the end-user. The network configuration that is set, adapted or adjusted for a specific source content providers can have an influence on the charges levied to the source content provider.

To this end, the method of the invention could comprise a step of logging content transport characteristics for a plurality of content transports over the network. By monitoring the behaviour of the source content providers when providing content to the end-users, it becomes possible to adapt network characteristics for these source content providers individually. The transport network providers' services would then become an asset to the source content providers, one they would be willing to allow the transport network providers to share in the profits for. Therefore, in such a method one could further deduce network resource parameters from the logged content transport characteristics. This could be performed for a plurality of content providers. Further the network resource parameters could be adapted for the relevant content providers and the content transport over the network performed by these content providers. Thus a taylor-made network, at least from the point of view of the source content providers, can be established. Also, in such a method one could envisage that the network resource parameters to be adapted to individual source content providers could comprise response time, bandwidth made available to a content provider, queue handling, queue infrastructure configuration, etcetera. Thus, for individual source content providers a virtually individualised network can be created, in which the source content providers will surely have a technical and commercial interest. End-users will benefit greatly, since they would then even be able to seek out technically and financially attractive combinations for obtaining content of source content providers and transport network providers.

In such a method the inventors of the present invention could even envisage a step, further comprising adapting the value in correspondence with adaptation of the network resource parameters for any given service provider. Depending on volume sent by an individual source content providers, adaptation of the value eventually charged to them could be decreased, resulting in a discount to the source content providers for using a network of a transport network provider who is operating the network at his disposal in accordance with the present embodiment of the invention. Such benefits can be used for enticing new end-users to come to them for the desired content, when the discounts are used for the benefit of the end-users, and can also be used to pay at least in part for the additional costs of using the network run by the transport network provider employing the present invention, thus creating a technically and commercially beneficial situation for all parties involved in data transfer over a transport network.

Herein below embodiments as non-limiting examples of the present invention are disclosed referring to the enclosed drawings, in which the same or similar components are identified with the same reference numbers, and in which:
Figure 1 shows a schematic representation of a first embodiment;
figure 2 shows a detail corresponding with the embodiment of figure 1, but with extended functionality; and
figure 3 shows a further extended embodiment of the invention.

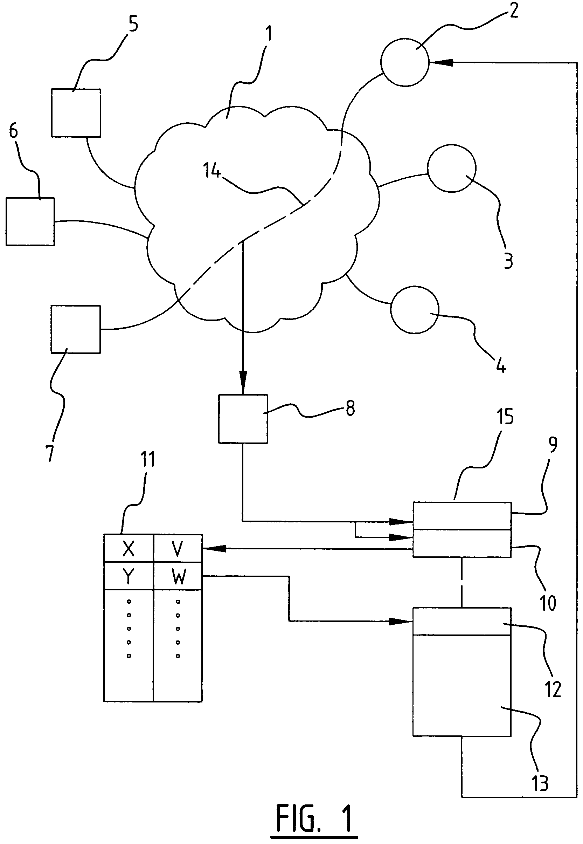

In figure 1 a configuration is shown, in which the present invention is embodied. In the configuration of figure 1, a network 1 is employed for content transport from source content providers 2, 3, 4 to end users 5, 6, 7. For transport of a particular item of content from for example source content provider 2 to end user 7 a path is created through the network 1 from the source content provider 2 to the end user 7. The path 14 through the network 1 is indicated in dashed lines. Along this path 14 a monitoring device 8 is employed to monitor transfer of content along the path 14 through the network 1. The monitoring device 8 is able to determine or establish the identity of the source content provider 2, together with an indication of the nature of substance of the content transferred or transported along the path 14. The identification of the source content provider 2 is entered into a table 15 together with an indication of the substance or nature of the transported content. These items of information are entered into the table 15 as entries 9, 10, respectively corresponding with the identification of the source content provider (item 9) and with the substance or nature of the content transported along the path 14 (item 10).

It is noted that the monitoring device 8, which could be interpreted as a nature of content establishing module, is able to determine the nature of content by any known or novel means. For instance, a file extension can suffice to ascertain the type of content to be transported. Alternatively one could consider actually having to review a content item in the body on practically a bits and bytes level thereof to establish the nature or type of content to be transported, but this could be excessively expensive. When block-based transport is performed, the header of a block could be "read" to distill therefrom the nature of the content. However, as indicated above, the cooperation of source content providers could also be relied on, in that these could send with the content an indication of the nature thereof. This could be done by having the source content providers append a preamble or the like to all transports for indicating the nature of the content to be transported.

Especially the information on the substance or nature of the content transported along the path 14 is in isolation entered into a separate table 11, where each category of content on the basis of the nature or substance thereof, as indicated with X, Y... is linked to a corresponding value as indicated with V, W... in table 11. A value V, W corresponding with the established nature or substance of the content transported over the path 14 in the network 1 is then entered into a calculation module 12, together with at least information on the source content provider 2 for calculating costs to be attributed to the source content provider 2. For actually generating an invoice a separate invoicing module 13 is provided, which enables the invoice for source content provider 2 to be generated on the basis of the identification information from item 9 regarding the source content provider 2 and optionally also on the basis of the substance or nature information regarding the content in item 10 of table 15.

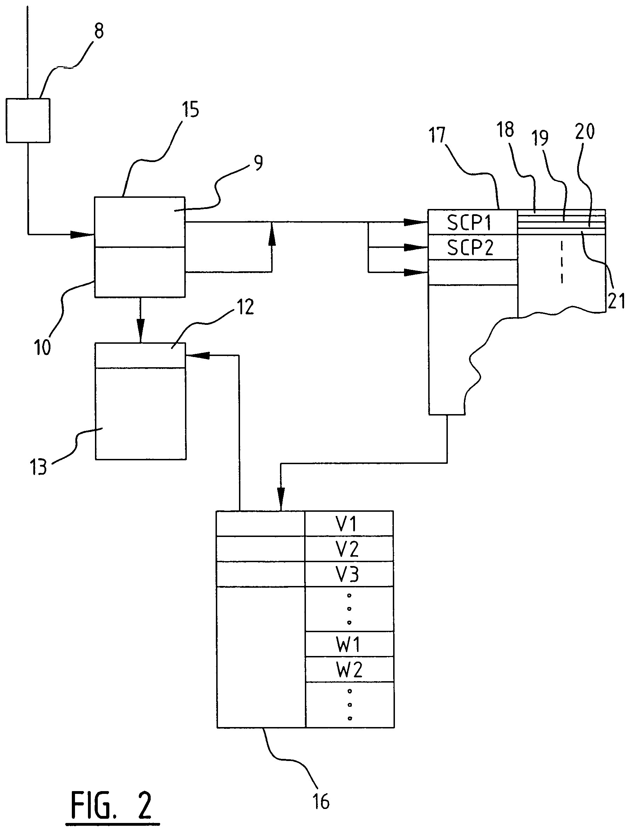

In figure 2 an extended embodiment of the present invention is shown, where an individualised feature of logging is provided. Logging is performed in the form of table 16 in combination with table 17, together with table 15. Table 16 corresponds with table 11, but the values VW are not merely attributed to specific substance or nature of content items transported along the transport path 15 through network 1, but the values V1, V2, V3, ..., W1, W2, ... are attributed to items of content corresponding with specific substances or natures of this content in combination with the identity of the source content providers SCP1, SCP2, ..., which relationship is laid down in table 17. The values attributed in table 16 can also be incorporated into table 17, in an alternative embodiment. Thus it is possible to attribute different values to items of content of an identical substance or nature, but from different source content providers. The different categories of substance or nature of content are identified in table 17 as items 18, 19, 20, 21 for one specific source content provider, which is identified in table 17 as SCP1. For each source content provider 2, 3, 4, ..., separate entries SCP1, SCP2, ... are provided in table 17. On the basis of categories 18, 19, 20, 21 for each specific source content provider 2, 3, 4, SCP1, SCP2, ..., corresponding values V1, V2, V3, ..., W1, W2, ... can be determined and entered into the relevant tables 16, 17. Each specific source content provider 2, 3, 4 can therefore receive invoices on the basis of value attributed to the content items sent thereby over the network 1 individually.

With such relationships being established in the network or at least by the transport network provider, who is in charge of the network 1, commercial exploitation of the transport network 1 can also comprise allowing the transport network provider to share in the profits, that previously had only been gathered by the source content providers 2, 3, 4. As an incentive for the source content providers 2, 3, 4 to allow the network provider in charge of the network 1 to share in the profits, logging as disclosed in relation to fig. 2 can be employed to provide specific network services to each of the source content providers 2, 3, 4.

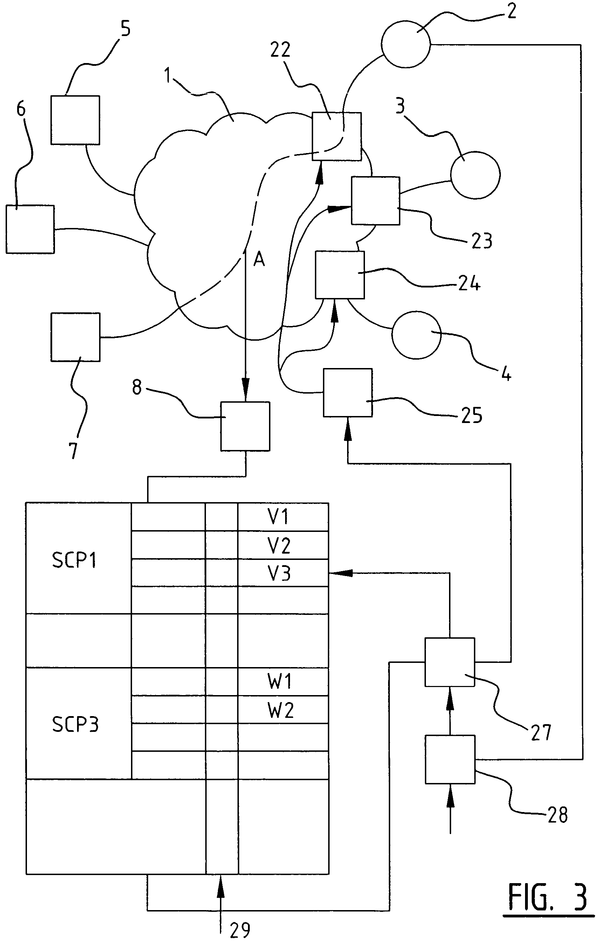

For example, in fig. 3, it is disclosed that each of the source content providers 2, 3, 4 is connected to the network 1 via an interface device 22, 23, 24. Network parameters for the network 1 itself or for access to the network 1 for each of the source content providers 2, 3, 4 can be adapted or adjusted using feedback information from a feedback device 25. Thus, the technical behaviour of the network 1 as seen from each of the source content providers 2, 3, 4 can be adjusted or adapted corresponding with and on the basis of transport behaviour of each of these source content providers 2, 3, 4. For instance, if anyone of the source serviced providers 2, 3, 4 is found by logging of fig. 2 or by any other means within the scope of the present invention, to only transport low volumes of content of low value to end users 5, 6, 7, the values attributed to such content transport can be average or regular. However, if the value or the volume of the content transports performed by each of the source content providers 2, 3, 4 increases, a higher value can be attributed. For this in a combined table 26 comprising entries corresponding to the entries of tables 16 and 17 in fig. 2, the values attributed to content transport from each of the source content providers 2, 3, 4 can be adapted by a calculating device 27, which determines when on average or on the basis of any other algorithmic method of determination the average value, volume or nature and/or substance of content transport increases from any of the source content providers 2, 3, 4. If this is ascertained, then values V1, V2, V3; W1, W2, ... can be adapted accordingly. Moreover, the system parameter adapting device 25 can be used to adapt parameters in the access interfaces 22, 23, 24 for each of the source content providers 2, 3, 4. Thus, the network 1 through access thereto can be made more suitable for the specific type, nature or substance of content provided by each of the source content providers 2, 3, 4 to anyone of the end users 5, 6, 7.

Adapting each of the values, in the combined table 26, can also be done on the basis of information from anyone of the source content providers, in this case source content provider 2. The feedback can be entered into an input device 28 automatically and/or manually in order to instruct the calculating device 27 to adapt or amend the values V1, V2, V3, ...; W1, W2, ... for that specific source content provider 2. In particular, such an amendment of the values attributed to the content originating from the relevant source content provider 2 can be adapted or amended on the basis of a commercial deal, where the exploiter of the source content provider 2 is confronted with his or her use characteristics regarding use of content transport over the network 1, where an offer can be made to this exploiter to adapt or amend the values and moreover adapt the behaviour of the network 1 to the specific uses of the relevant source content provider 2.

Apart from adapting the behaviour of interface devices 22, 23, 24, the device 25 can also influence directly system parameters of the network 1, rather than to influence parameters of the interface devices 22, 23 and 24. For instance, network resource parameters can be adapted or amended, such as response time, band width made available to a source content provider, queue-handling for a specific source content provider, queue-infra structure configuration regarding a specific source content provider, etc. Thus, the network 1 and especially the behaviour thereof in relation to each of the source content providers 2, 3, 4 can be tailormade to the needs of each of these source content providers 2, 3, 4.

Further it is noted that for example in the combined table 26 in fig. 3, a column 29 is dedicated to frequency of content transport over the network 1 of content from a specific category corresponding with a nature or substance of the content. Thus, logging can easily be provided.

After having described the present invention herein above, at least a limited number of embodiments thereof, further and alternative embodiments will force themselves into the imagination of a skilled person, which alternative and additional embodiments are all considered to lie within the scope of protection for the present invention, as defined in the accompanying claims.

For instance, alternative methods of logging in separate tables or separate memory means can be provided rather than in combination with the values also, as indicated in table 26 of fig. 3. Also, manual input of information necessary for altering the values attributed to categories of content from specific source content providers can be used, as a result of which human intervention into the method and system can be allowed. Thus it is possible with the present invention to make commercial deals other than by automated means, in order to come to different values to be attributed to the content transport from separate content service providers. All such further and alternative embodiments are considered to comply with the present invention in as far as these do not diverge from the enclosed claims. Also, combinations of end users and source content providers can be envisaged, for instance in a peer-to-peer network, where the transport network provider can also play a role in providing tailormade network characteristics for each of the end users, who are engaging in sharing of documents or other content.

## Claims

1. Method of providing network transport services for content transported over a network (1) by a source content provider (2-4) to a destination, such as an end-user (5-7), between which in use the network extends, the method comprising:
- establishing from content transported over the network the identity of the source content provider;
- establishing from the content transported over the network the nature of the content; and
- attributing to the content one of a number of values corresponding with the nature of the content;
- charging to the established source content provider, costs corresponding with the value attributed to the content for transport of the content over the network.

2. Method according to claim 1, further comprising logging content transport characteristics for a plurality of content transports over the network (1).

3. Method according to claim 2, further comprising deducing from the logged content transport characteristics network resource parameters for a plurality of content providers (2-4) and adapting the network resource parameters for the relevant content providers and the content transport over the network performed by the content providers.

4. Method according to claim 3, wherein the network resource parameters comprise at least one of the parameters from the group:
response time, bandwidth made available to a content provider, queue handling, queue infrastructure configuration.

5. Method according to either of claims 3 and 4, further comprising adapting the value in correspondence with adaptation of the network resource parameters for any given service provider (2-4).

6. System configured to perform, the system comprising a network (1) for transport of content items there-along from source content providers (2-4) to end-users (5-7), the method of any one of the preceding claims, comprising components, modules and features to perform all steps as defined in at least claim 1 of the preceding method claims.

7. System according to claim 6, comprising a billing device (13) for generating and forwarding invoices to source content providers (2-4) based on value information in the system.

8. System according to claim 7, wherein the billing device (13) is provided with system information for generating the invoice, such as transport network adaptation information.

## Patentansprüche

1. Verfahren zur Bereitstellung von Netzwerktransportdiensten für Inhalt, der über ein Netzwerk (1) von einem Quellinhaltsanbieter (2-4) zu einem Ziel, wie etwa einem Endbenutzer (5-7), zwischen denen sich das Netzwerk in Nutzung erstreckt, transportiert wird, wobei das Verfahren Folgendes umfasst:
- Ermitteln der Identität des Quellinhaltsanbieters aus Inhalt, der über das Netzwerk transportiert wird;
- Ermitteln der Art des Inhalts aus dem Inhalt, der über das Netzwerk transportiert wird; und
- Zuweisen eines aus einer Vielzahl von Werten entsprechend der Art des Inhalts zu dem Inhalt;
- Verrechnen von Kosten für den Transport des Inhalts über das Netzwerk zulasten des ermittelten Quellinhaltsanbieters entsprechend dem Wert, der dem Inhalt zugewiesenen wurde.

2. Verfahren nach Anspruch 1, weiterhin umfassend das Protokollieren von Inhaltstransportmerkmalen für eine Vielzahl von Inhaltstransporten über das Netzwerk (1).

3. Verfahren nach Anspruch 2, weiterhin umfassend das Ableiten von Netzwerkressourcenparametern für eine Vielzahl von Inhaltsanbietern (2-4) aus den protokollierten Inhaltstransportmerkmalen und das Anpassen der Netzwerkressourcenparameter für die jeweiligen Inhaltsanbieter und den Inhaltstransport über das Netzwerk, der von den Inhaltsanbietern durchgeführt wird.

4. Verfahren nach Anspruch 3, wobei die Netzwerkressourcenparameter mindestens einen der Parameter aus der folgenden Gruppe umfassen:
Antwortzeit, für einen Inhaltsanbieter verfügbar gemachte Bandbreite, Warteschlangenbearbeitung, Konfiguration der Warteschlangeninfrastruktur.

5. Verfahren nach einem der Ansprüche 3 und 4, weiterhin umfassend das Anpassen des Wertes in Übereinstimmung mit der Anpassung der Netzwerkressourcenparameter für jeden beliebigen gegebenen Dienstanbieter (2-4).

6. System, wobei das System ein Netzwerk (1) für den Transport darin von Inhaltselementen von Quellinhaltsanbietern (2-4) zu Endbenutzern (5-7) umfasst, ausgelegt zum Durchführen des Verfahrens nach einem beliebigen der vorstehenden Ansprüche, umfassend Komponenten, Module und Funktionen, um alle Schritte durchzuführen, wie sie mindestens in Anspruch 1 der vorstehenden Verfahrensansprüche definiert sind.

7. System nach Anspruch 6, umfassend eine Verrechnungsvorrichtung (13) zum Erzeugen und Weiterleiten von Rechnungen an Quellinhaltsanbieter (2-4) basierend auf Wertinformationen in dem System.

8. System nach Anspruch 7, wobei die Verrechnungsvorrichtung (13) mit Systeminformationen zum Erzeugen der Rechnung, wie etwa Transportnetzwerkanpassungsinformationen, versorgt wird.

## Revendications

1. Procédé de fourniture de services de transport de réseau pour un contenu transporté sur un réseau (1) par un fournisseur de contenu source (2-4) vers une destination, comme un utilisateur final (5-7), entre lesquels en utilisation le réseau s'étend, le procédé comprenant les étapes suivantes :
- établir à partir d'un contenu transporté sur le réseau l'identité du fournisseur de contenu source ;
- établir à partir du contenu transporté sur le réseau la nature du contenu ;
- attribuer au contenu l'une d'un nombre de valeurs correspondant à la nature du contenu ;
- imputer au fournisseur de contenu de source établi des coûts correspondant à la valeur attribuée au contenu pour le transport du contenu sur le réseau.

2. Procédé selon la revendication 1, comprenant en outre la consignation de caractéristiques de transport de contenu pour une pluralité de transports de contenu sur le réseau (1).

3. Procédé selon la revendication 2, comprenant en outre la déduction à partir des caractéristiques de transport de contenu consignées de paramètres de ressource de réseau pour une pluralité de fournisseurs de contenu (2-4) et l'adaptation des paramètres de ressource de réseau pour les fournisseurs de contenu pertinents et le transport de contenu sur le réseau effectué par les fournisseurs de contenu.

4. Procédé selon la revendication 3, dans lequel les paramètres de ressource de réseau comprennent au moins un des paramètres du groupe : temps de réponse, largeur de bande mise à la disposition d'un fournisseur de contenu, gestion de file d'attente, configuration d'infrastructure de file d'attente.

5. Procédé selon l'une ou l'autre des revendications 3 et 4, comprenant en outre l'adaptation de la valeur en correspondance avec l'adaptation des paramètres de ressource de réseau pour un quelconque fournisseur de service donné (2-4).

6. Système configuré pour effectuer, le système comprenant un réseau (1) pour le transport d'items de contenu tout le long de fournisseurs de contenu source (2-4) à des utilisateurs finals (5-7), le procédé de l'une quelconque des revendications précédentes, comprenant des composants, des modules et des caractéristiques pour effectuer toutes les étapes telles que définies dans au moins la revendication 1 des revendications de procédé précédentes.

7. Système selon la revendication 6, comprenant un dispositif de facturation (13) pour générer et transférer des factures à des fournisseurs de contenu source (2-4) sur la base d'informations de valeur dans le système.

8. Système selon la revendication 7, dans lequel le dispositif de facturation (13) est pourvu d'informations de système pour générer la facture, comme des informations d'adaptation de réseau de transport.
